Europäisches Patentamt

European Patent Office

Office européen des brevets

(11) Publication number: **0 481 233 A2**

## EUROPEAN PATENT APPLICATION

(21) Application number: **91115825.1**

(22) Date of filing: **18.09.91**

(51) Int. Cl.5: **G06F 12/08**

(30) Priority: **12.10.90 US 597902**

(43) Date of publication of application:
**22.04.92 Bulletin 92/17**

(84) Designated Contracting States:
**DE FR GB**

(71) Applicant: **International Business Machines
Corporation
Old Orchard Road
Armonk, N.Y. 10504(US)**

(72) Inventor: **So, Kimming
10 Hunter Drive
Armonk, New York 10504(US)**
Inventor: **Wang, Wen-Hann
11703 Charing Cross
Austin, Texas 78759(US)**

(74) Representative: **Rudolph, Wolfgang, Dipl.-Ing.
IBM Deutschland GmbH Schönaicher
Strasse 220
W-7030 Böblingen(DE)**

(54) **Multiple level caches.**

(57) A system and method is disclosed for a multiprocessor system (MP) having multiple levels of cache storage and shared memory. A multiprocessor system (MP) is disclosed which comprises microprocessors (MPU). The MPUs, which have on-chip $L_1$ caches, are interfaced with external $L_2$ caches. $D_2$ directories are situated parallel to the $L_2$ caches and shadow the $L_1$ caches. The $D_2$ directories maintain data coherence among all the caches and a main memory, while decreasing the amount of interference with the on-chip $L_1$ caches. Reducing the amount of interference with the on-chip $L_1$ caches. Reducing the amount of interference permits the MPUs to perform at higher speeds and permits the further coupling of additional MPUs to the multiprocessor system (MP).

Fig. 1

PRIOR ART

EP 0 481 233 A2

The present invention is directed to a system and method for maintaining the coherence of data sharing among processors of the multiprocessor system according to the preamble of claims 1, 6 or 23 respectively.

Recently, a trend has developed in the microprocessor industry to include an on-chip cache in high performance microprocessors. For example, the Intel Corporation, of California, U.S.A., has included an on-chip cache on the recently-released INTEL 80486 and 80860 microprocessors.

A "cache" is a high speed, hardware-managed buffer memory which is virtually transparent to computer programming. A cache comprises a data array having data lines, which is the basic cache memory unit, and a directory for allowing quick access to the data array. Substantively, data lines could be either instructions or actual data. Moreover, if a data line is sought in a cache and the data line is found, then a cache "hit" is said to have occurred. If a data line is sought in a cache and the data line is not found, then a cache "miss" is said to have occurred.

To a certain extent, an on-chip cache can reduce the memory access time of the central processing unit (CPU) in a microprocessor. The decrease in access time is significant where the main memory of a computer system is relatively far away from the CPU, and also in a multi processor MP system where many processors are accessing the main memory. However, because the space in a microprocessor is extremely limited, on-chip caches are usually implemented with a reduced capacity. Some on-chip caches have a capacity of 8 to 16 Kilobytes and/or have a smaller line size ranging from 8 to 16 bytes. The reduced capacity can substantially compromise the effectiveness of the on-chip cache in a high performance microprocessor.

To achieve better performance, an external cache is often interfaced to the outside of a microprocessor in the conventional art. In a sense, the external cache serves as a large buffer between the on-chip cache and the main memory.

In a multi processor MP system having external caches interfaced with multiple microprocessors, the on-chip caches of the various microprocessors can be conceptualized collectively as level-one ($L_1$) caches, while the external caches can be conceptualized collectively as level-two ($L_2$) caches. The $L_2$ caches serve as a large buffer between the $L_1$ caches and the main memory.

Furthermore, in an MP system where the processors share the same main memory, the MP system must maintain "coherency" among all data lines, including the $L_1$ and $L_2$ caches as well as the main memory. Coherency refers to the concept in which each CPU must have access to the latest data line corresponding to a particular address in the shared memory. In other words, if a data line at a certain address is simultaneously shared by one or more private caches, then as the data line is updated or changed, the latest data line must be available to all of the CPUs.

One way of maintaining coherency of data sharing across the multiple processors is to maintain the coherence at the $L_2$ caches. For example, in order to maintain coherency, data lines in the $L_1$ and/or $L_2$ caches are removed, replaced, and/or the status of the data lines is updated in the corresponding cache's directory. The foregoing actions take place during what are called "cross interrogations."

Cross interrogations refer to the specific processes by which coherency is ensured. They may be implemented using a number of different protocols. For example, if a data line is modified by a CPU in a cache and if that line appears elsewhere in the MP system, then a typical protocol might update or invalidate the data line at the latter location via a cross interrogation.

As more processors are added to the multi processor MP system, a higher degree of cross interrogations must take place and more interactions must occur with the $L_1$ caches. Accordingly, in a broad sense the excessive interference with the $L_1$ caches reduces the number of processors that may be operating in the multi processor MP system.

Because of the need to perform cross interrogations with the $L_1$ caches of an MP system, the content of their corresponding $L_1$ directories must be accessed many times, thus inhibiting the performance of the processors. One solution for reducing the number of requisite transactions with the $L_1$ directories is to enforce an inclusion property between the $L_1$ and $L_2$ caches. In other words, the data content of any $L_1$ cache is always a subset of the data content of its respective $L_2$ cache. Also, the $L_2$ directory of the $L_2$ cache has tags (prefixes of addresses) indicating whether or not a part of an $L_2$ line is currently in the $L_1$ cache.

However, the inclusion property does have serious drawbacks in terms of performance. The inclusion property requires that when an $L_2$ data line is replaced, all the $L_1$ data lines belonging to the $L_2$ data line must be invalidated or removed at the $L_1$ cache. The foregoing interactions, or interference, with the $L_1$ caches tend to unreasonably slow the processors of a multi processor MP system, because the interference results in $L_1$ cache misses.

$L_1$ and $L_2$ caches commonly employ a least-recently-used (LRU) replacement algorithm to replace data lines. When a cache is full and the associated processor requests data not currently in the cache, then a data line must be replaced in order to make room for another data line containing the requested data. Using the LRU replacement algorithm, the line least recently requested will be replaced.

Furthermore, conventionally the "reference status" of $L_1$ and $L_2$ data lines are fundamentally different. The reference status of $L_1$ lines in an $L_1$ cache is driven by the memory references generated by its corresponding CPU. However, the reference status of the $L_2$ lines in an $L_2$ cache is usually driven by the $L_1$ cache misses. Therefore, a frequently-accessed, and hence, a most-recently referenced, $L_1$ data line can be in a least-recently referenced $L_2$ data line. Thus, a replacement of an old $L_2$ data line will oftentimes result in the invalidation of a new $L_1$ data line.

It is therefore the object of the invention to overcome the described problem by an improved system and method.

The solutions are described in the characterizing part of claims 1 6, 15 for the system and in the characterizing part of claim 23 for the method.

The system and method envision placing a second directory at level $L_2$ corresponding to each $L_1$ cache. Specifically, the second directory is connected between a first directory of the $L_1$ cache and the level of cache storage beyond $L_2$, if any. If no level of cache storage exists beyond $L_2$, or in other words, if the $L_2$ cache is interfaced to a system bus, then the second directory is also interfaced to the system bus. The second directory "shadows" the directory of the $L_1$ cache in that the second directory is substantially identical to its corresponding first directory. Moreover, the second directory has means to indicate the status of data lines in its respective $L_1$ cache. Accordingly, the second directories in the multi processor MP system maintain data coherence among all the caches and a main memory, while decreasing the amount of interference with the $L_1$ caches.

In another implementation of the present invention, a fourth directory is connected between a third directory of the $L_2$ cache and the next higher level of cache storage, if any, or else to the system bus. The fourth directory shadows the third directory. The shadow relationship of the fourth directory to the third directory is analogous to the relationship of the second directory to the first directory. Moreover, the fourth directory has means to indicate the status of data lines in its respective $L_2$ cache. The implementation reduces the number of inquiries to the $L_2$ cache. The system is ideally applicable and beneficial to an $L_2$ cache having only a single port.

A method is envisioned by the present invention for reducing interference with the internal cache of a processor in a multiprocessor system. The processor is coupled to an external cache which communicates with a system bus. The internal cache has a first directory. Further, a second directory is interfaced between the first directory and the system bus.

The method comprises the following steps: (a) writing a fetch command for a data line onto the system bus; (b) reading the fetch command from the system bus at the second directory; and (c) determining at the second directory whether the data line resides in the $L_1$ cache. A further step of the method could be determining at the second directory whether the data line is shared. Still a further step of the method could be to determine at the second directory or at the $L_1$ cache whether the data line has been changed by the processor.

The invention not only overcomes the deficiencies of conventional technology, as noted above, but also provides the following features and advantages.

First, the system and method reduces the amount of interference with $L_1$ caches, while maintaining data coherence of the multi processor MP system. Reducing the amount of interference with $L_1$ caches permits processors to perform at higher speeds and thereby permits the further coupling of additional processors to the multi processor MP system.

Second, no inclusion property need be enforced between the $L_1$ and $L_2$ caches to reduce interference with $L_1$ caches. In other words, replacements of $L_1$ and $L_2$ data lines are independent of each other so that undesired replacement of frequently-used $L_1$ lines is avoided. Consequently, the present invention allows for flexible designs of the $L_2$ caches, which can be private or shared.

Finally, the present invention is applicable to both store- thru (ST) caches and store-in (SI) $L_1$ caches, allowing for flexible implementation.

Further features and advantages of the present invention will become apparent to one skilled in the art upon examination of the following drawings and detailed description. It is intended that any additional features and advantages be incorporated herein.

The present invention as defined in the claims can be better understood with reference to the text and to the following drawings:

Fig. 1    is a block diagram of a conventional multiprocessing system (MP) in which the present invention can be implemented;

Fig. 2    is a block diagram of a conventional cache having a directory and a data array;

Fig. 3    is a block diagram showing the relationship of a multi processor MPU of Fig. 1 and the block diagram of Fig. 2 as well as conventional status bits;

Fig. 4    is a block diagram illustrating a conventional inclusion property with regard to an $L_1$ cache and an $L_2$ cache in a single processor system;

Fig. 5    illustrates a first preferred embodiment of the present invention;

Fig. 6    shows status bits in a $D_1$ directory and status bits in a $D_2$ directory for the implementation of the first preferred embodiment;

Fig. 7    is a flowchart illustrating an example of a protocol which can be used to implement cache hits (for data fetches, instruction fetches, and data stores) in the present invention;

Fig. 8    is a flowchart showing an example of a protocol which can be used to implement an invalidation of a data line in the present invention;

Fig. 9    is a flowchart illustrating an example of a protocol for an instruction fetch miss in the present invention;

Fig. 10   is a flowchart showing an example of a protocol for checking remote caches for data lines in the present invention, which checking procedure is performed in Figures 9 and 11;

Fig. 11   is a flowchart showing an example of a protocol which can be used to implement a data fetch miss in the present invention;

Fig. 12   is a flowchart illustrating an example of a protocol for a data store miss in the present invention;

Fig. 13   shows status bits in the $D_1$ directory and status bits in the $D_2$ directory for the implementation of a second preferred embodiment;

Fig. 14   shows status bits in the $D_1$ directory and status bits in the $D_2$ directory for the implementation of a third preferred embodiment;

Fig 15    is a block diagram illustrating a fourth preferred embodiment of the present invention;

Fig. 16A  is a block diagram showing a conventional, dual-ported, $L_2$ cache which is capable processing two data line requests simultaneously; and

Fig. 16B  is a block diagram illustrating a conventional, single-ported, $L_2$ cache relative to a fifth preferred embodiment of the present invention.

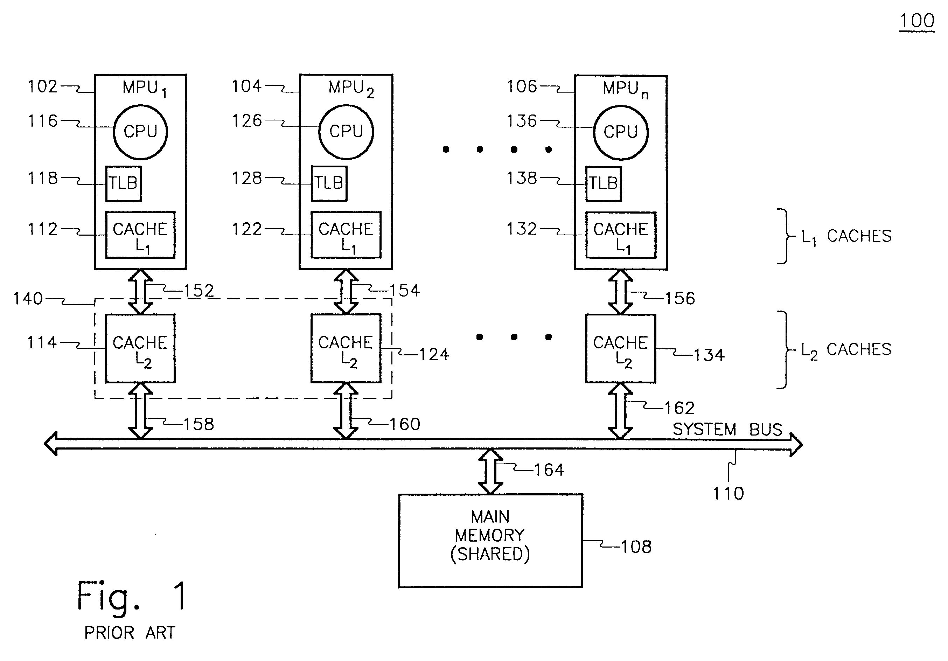

Fig. 1 is a block diagram of a multiprocessing (MP) system 100 within which the preferred embodiments of the present invention can be implemented. The MP system 100 is used for data processing and has n microprocessing units (MPU), designated by reference numerals 102, 104, and 106. The MPUs 102, 104, and 106 may be any combination of any commercially available microprocessors, such as from the INTEL family and/or the MOTOROLA family of microprocessors. For example, use of the present invention is particularly envisioned for the MOTOROLA 68030 and 68040 microprocessors as well as the future INTEL microprocessors. However, the present invention is not limited to the foregoing processors, but only to the constraints hereinafter set forth.

The MPUs 102, 104, and 106 communicate with each other and with a main memory (also, "system" memory) 108 via a high speed system bus 110. The MPUs 102, 104, and 106 of the MP system 100 share the main memory 108. Each of the MPUs 102, 104, and 106 has multiple levels of cache storage, namely, at least a level- one ($L_1$) and a level-two ($L_2$). For example, MPU 102 has an on-chip internal $L_1$ cache 112 and also a private external $L_2$ cache 114, which both serve as a large buffer between a CPU 116 and the main memory 108. The private $L_2$ cache 114 is generally larger with respect to memory storage than the on-chip $L_1$ cache 112.

Moreover, the MPU 102 has a translation lookaside buffer (TLB) 118 which serves to translate virtual memory addresses in the program of CPU 116 into real memory addresses. TLBs 118, 128, and 138 are not focused upon by the present invention, but are merely shown for clarity.

Operationally, when the MPU 102 wishes to access data in memory, its CPU 116 will send out an address first to the internal $L_1$ cache 112. If the $L_1$ cache 112 contains the data corresponding to the address, then a cache "hit" is said to have occurred, and the data is retrieved by the CPU 112. However, if the $L_1$ cache 112 does not contain the data corresponding to the address, then a cache "miss" is said to have occurred, and the $L_2$ cache 114 is then consulted for the data. If a miss occurs at the $L_2$ cache 114, then the CPU 116 will send the address to the main memory 108 to retrieve the data.

It is worth noting that the private external caches 114, 124, and 134 need not be mutually exclusive in the architecture of Fig. 1. The MPUs 102, 104, and 106, and any combinations thereof, may share the same cache. For instance, as shown by a phantom block 140, the MPUs 102 and 104 may share the same external cache 140. However, from a logical perspective, the MPUs 102 and 104 still have two levels $L_1$ and $L_2$ of caches.

In a broad sense, the present invention is directed to a system and method for maintaining the coherence of data sharing among the MPUs 102, 104, and 106 of the MP system 100. For a clear understanding of the present invention, an understanding of the fundamental functioning of caches is necessary.

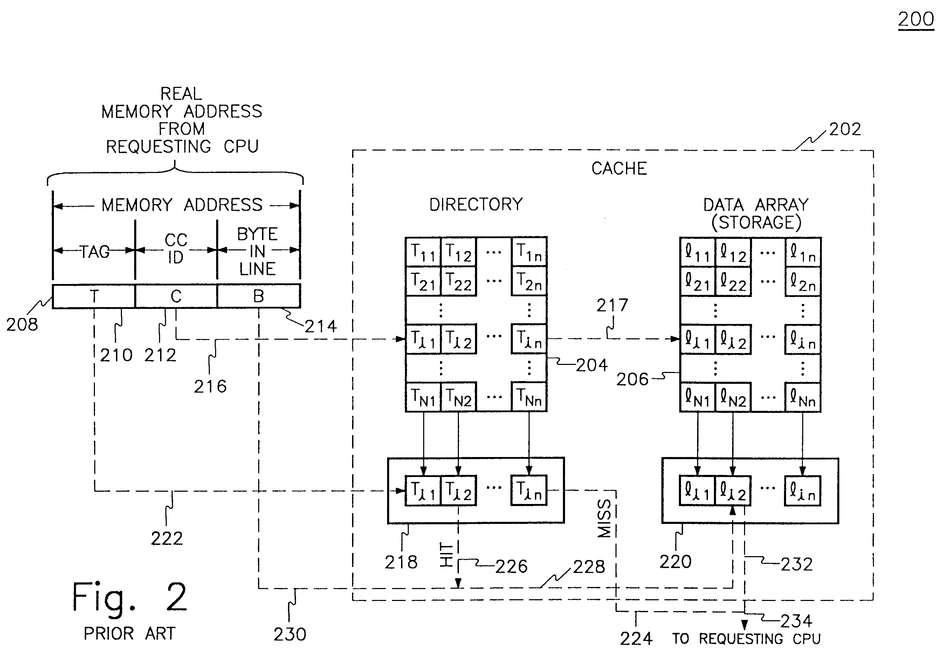

Fig. 2 is a block diagram of a conventional cache 202. The following description with respect to the cache 202 is equally applicable to the $L_1$ and $L_2$ caches of Fig. 1.

The cache 202 has two subentitles: a directory 204 and a data array 206. The directory 204 comprises a two-dimensional array of "tags" T11-$T_{Nn}$, which are compared with addresses from a CPU to determine if there is a hit or a miss. The data array 206 comprises a two-dimensional array of data lines $l_{11}$-$l_{Nn}$. The directory 204 and the data array 206 are in a one-to-one correspondence with each other.

As shown, a memory address 208 (for instance, 32 bits) is sent from a "requesting" CPU to the cache 202. The address is bit-sliced in order to determine whether there is a hit or miss and to retrieve data lines if a hit occurs. The data lines can be instructions and/or data. Accordingly, each address has a first portion 210 denoting a particular tag (T) within the directory 204. A second portion 212 denotes a congruence class identification (CC ID), or row, in both the directory 204 and the data array 206. Finally, a third portion 214 denotes a byte (B) in a particular line $l_{11}$-$l_{Nn}$ of data.

As indicated by phantom arrows 216 and 217, the CC ID is used to specify a particular row in the two dimensional arrays of both the directory 204 and the data array 206. Simultaneously, a row of tags from the directory 204 and a row of data lines from the data array 206 are read, respectively, into temporary storage buffers 218 and 220. As an example, the row having tags $Ti_1$-$T_{in}$ and lines $l_{i1}$-$l_{in}$ is shown to have been identified by the CC ID and loaded in buffers 218 and 220.

Next, the cache 202 scans down the identified row comparing the tag T (first portion 210) of the memory address 208 with the tags $T_{i1}$-$T_{in}$ of the row, as indicated by a phantom arrow 222. If the tag T of the address is not found in the row, then the particular data corresponding to the address is not present within the cache 202, and consequently, a notification of a miss will be transmitted to the CPU, as shown by a phantom arrow 224.

However, if the tag T of the address is found in the row, then the particular data corresponding to the address is present within the cache 202, that is, a hit has occurred.

Fig. 2 illustrates in exemplary fashion when tag T matches tag $T_{i2}$. When the hit occurs, the tag $T_{i2}$ is used to identify the particular corresponding line $l_{i2}$, as shown by phantom line 226 and 228. Furthermore, the byte B (third portion 214) of the memory address 208 is used to specify the particular byte within the data line, as shown by phantom arrow 230. Accordingly, the data corresponding to the address sent from the requesting CPU is transmitted to the requesting CPU, as shown by a phantom arrow 234.

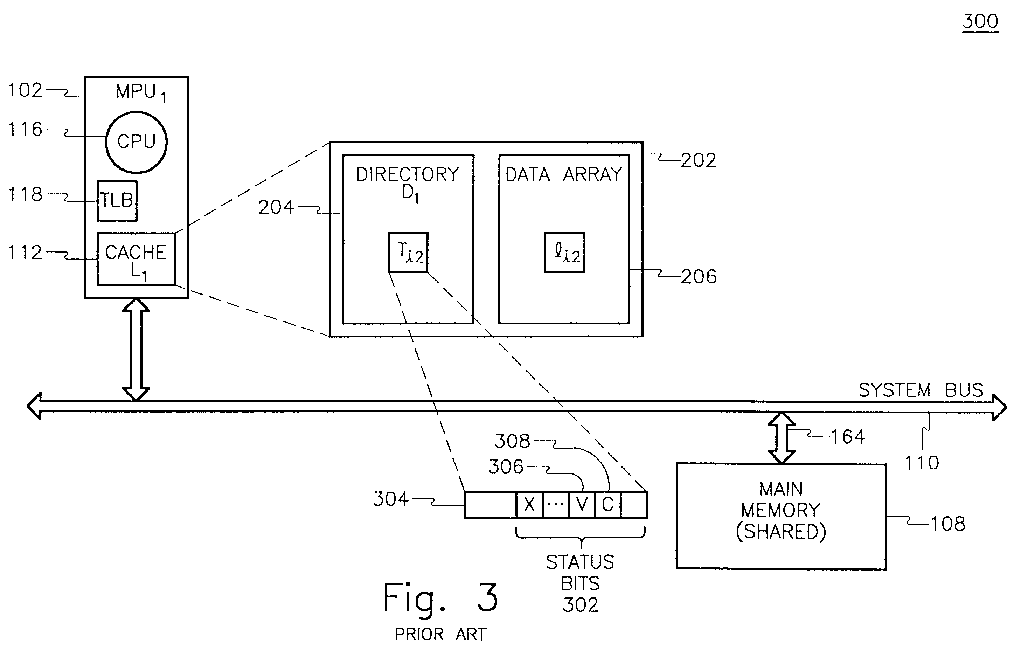

Fig. 3 illustrates the relationship between the MPU 102, for example, and the block diagram of Fig. 2. For purposes of discussion only, no $L_2$ cache is situated between the MPU 102 and the system bus 110. Fig. 3 further shows that each entry in the directory 204 has conventional status bits corresponding with each data line. Status bits are contained within the tag (first portion 210) of a memory address and provide information concerning data lines to aid in maintaining coherency among microprocessors of an MP system. Moreover, status bits can be read and manipulated during cross interrogations between caches.

As an illustrative example, tag Ti2 can be exploded into a block 304 having status bits 302. The status bits 302 include, for instance, a "valid" bit (V) 306 and a "change" (C) bit 308. Needless to say, the status bits 302 can be situated in any position within the byte of the tag $T_{i2}$, and the constituent bits within the set of status bits 302 can be ordered in any sequence.

The valid bit 306 indicates whether the corresponding data line $l_{i2}$ of the tag $T_{i2}$ is the latest version of the data. In other words, if a data line is updated in one cache, then that cache should either broadcast (supply the latest version) or else invalidate (indicate invalidity in directory 204) the data line in every other memory location in which the data line appears, such as at another cache. If the data line $l_{i2}$ is the latest version of the data, then the valid bit 306 will be in a certain preselected logical state (either high or low) so as to indicate that the data line is valid. Similarly, if the data line is not the latest version, then the valid bit 306 will assume the converse state (either high or low).

The change bit 308, sometimes referred to as the "dirty" or "modify" bit, indicates whether the corresponding data line $l_{i2}$ of the tag $T_{i2}$ has ever been changed by the corresponding CPU 116 in the MPU 102. Its dual states function similarly as the foregoing discussion related to the valid bit 306. Conventionally, the change bit 308 is present in SI caches to indicate to the CPU 116 whether the main memory 108 needs to be updated. If the change bit 308 indicates that a change has occurred, then the CPU 116 will eventually update the change in the main memory 108. The present invention utilizes the change bit 308 in a different manner, as will be described below.

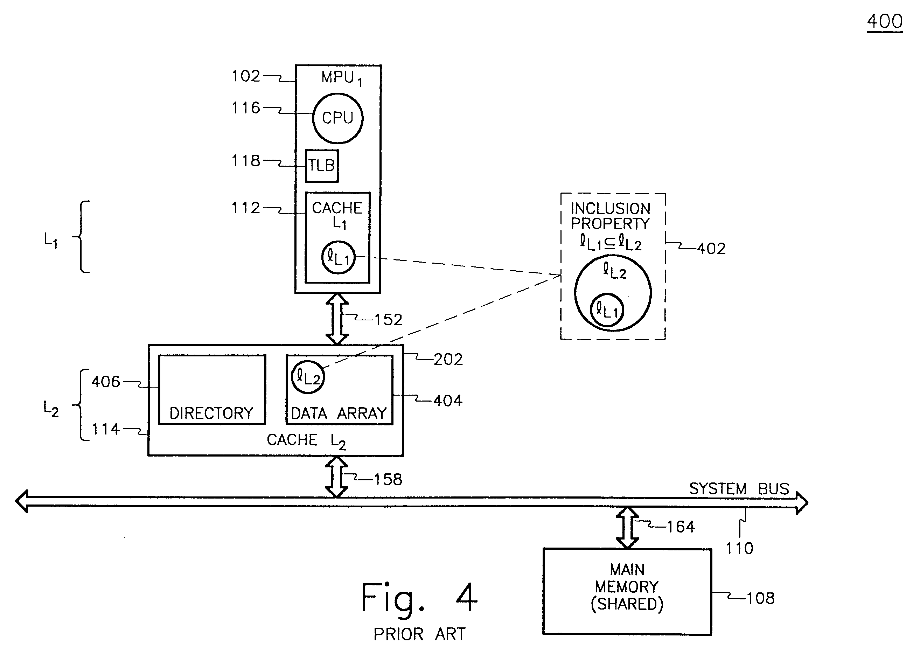

Fig. 4 illustrates an inclusion property which is conventionally implemented in systems where several levels of cache storage exist and where a need exists for minimizing the number of interactions with a processor. A need for minimizing contact arises where a high speed MPU is needed. By minimizing contact with the CPU of a MPU, the CPU is permitted to run without interruption, thereby increasing the speed of data processing. Furthermore, the need for a high speed MPU often arises in MP systems, because the addition of each new processor slows a MP system. In effect, by increasing the speed of the MPU, more processors may be added to the MP system.

As an example and for discussion purposes, the MPU 102 of Fig. 1 with its corresponding external $L_2$ cache 114 has been isolated in Fig. 4 to show a single processor system 400. To enforce the inclusion property, the content of the $L_1$ cache 112 should always be a subset of the content of the $L_2$ cache 114. As shown in phantom block 402, a line $l_{L_1}$ of the $L_1$ cache 112 is a subset of the line $l_{L_2}$ of the $L_2$ cache 114.

Further, a directory 406 indicates by its tags whether any data of the line $l_{L_2}$ is currently present in the $L_1$ cache 112. Finally, the inclusion property requires that when the line $l_{L_2}$ is replaced, all lines encompassed by it must also be removed from or invalidated in the $L_1$ cache 112.

Although the inclusion property has advantages, it is not satisfactory in a high speed MP system. The foregoing interactions with the $L_1$ cache 112 tend to slow the MPU 102. More specifically, the interactions result in misses in the $L_1$ cache 112, because the reference status and replacement status of $L_1$ lines and $L_2$ lines in the respective caches 112 and 114 are fundamentally different.

Conventionally, the reference status of $L_1$ lines in the $L_1$ cache 112 is driven by the memory references generated by the CPU 116, but the reference status of the $L_2$ lines in the $L_2$ cache 114 is usually driven by the misses in the $L_1$ cache 112. Therefore, a frequently-accessed, and hence, a most-recently-referenced, $L_1$ line can be in a least-recently-referenced $L_2$ line. Thus, a replacement of an old $L_2$ line will result in the invalidation of a new $L_1$ line.

Furthermore, as more processors are added to the single processor system 400 to implement an MP system, a higher degree of cross interrogations must take place and more interactions must occur with the $L_1$ caches. Accordingly, in a broad sense the excessive interactions with the $L_1$ caches reduces the number of MPUs that may be operating in the MP system.

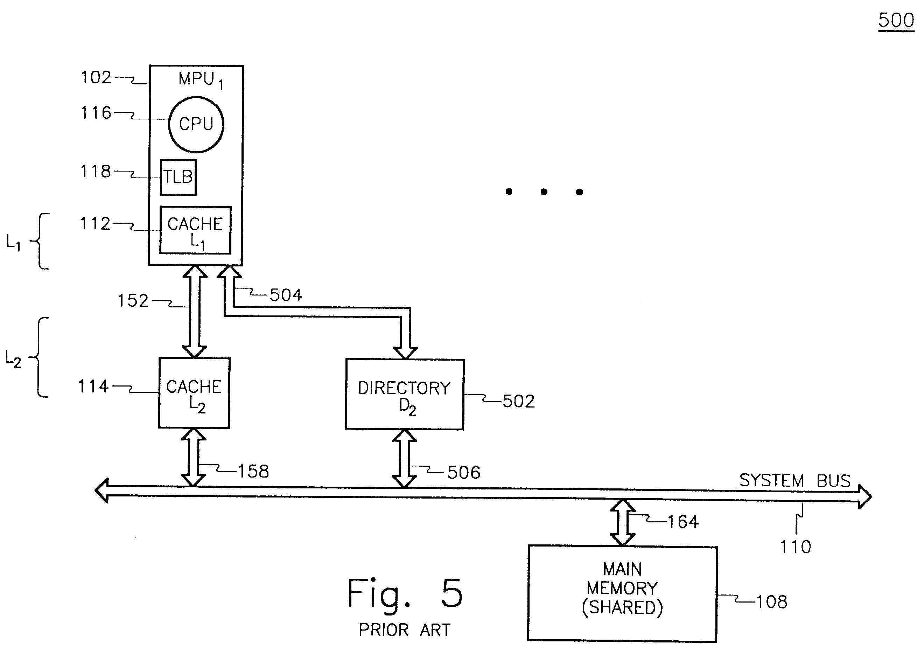

Fig. 5 shows a first preferred embodiment of the present invention which is to be implemented in a MP system. For purposes of discussion, only the MPU 102 with associated external $L_2$ cache 114 is shown connected to the system bus 110. Although not shown, the discussion that follows is applicable to any other processors having an external $L_2$ cache and connected to the system bus 110, namely the MPUs 102, 104, and 106 of Fig. 1.

Furthermore, it should be emphasized that the $L_1$ cache 112 and the $L_2$ cache 114 can be any two consecutive levels of cache storage in the memory hierarchy of a MP system.

The present invention envisions implementing a $D_2$ directory 502 between the MPU 102 and the system bus 110. The $D_2$ directory 502 communicates directly with the internal $L_1$ cache 112 via a communication link 504. It further communicates with the system bus 110 via a communication link 506. Conceptually, the $D_2$ directory 502 resides parallel with the external $L_2$ cache 114.

The $D_2$ directory "shadows," or is substantially duplicative of, the internal directory (not shown) in the $L_1$ cache 112 as will be discussed in detail below. The $D_2$ directory 502 can be used to eliminate the number of interactions with the MPU 102 to thereby increase the speed of the MPU 102 and allow for the inclusion of more processors in a MP system.

The $D_2$ directory 502 further eliminates the need to impose the inclusion property as shown and discussed in Fig. 4. In other words, the replacement of $L_1$ and $L_2$ data lines is independent of each other so that inappropriate replacement of frequently-accessed $L_1$ data lines can be avoided. Further, as will be discussed below, the present invention is directed to both store thru (ST) caches and store-in (SI) caches.

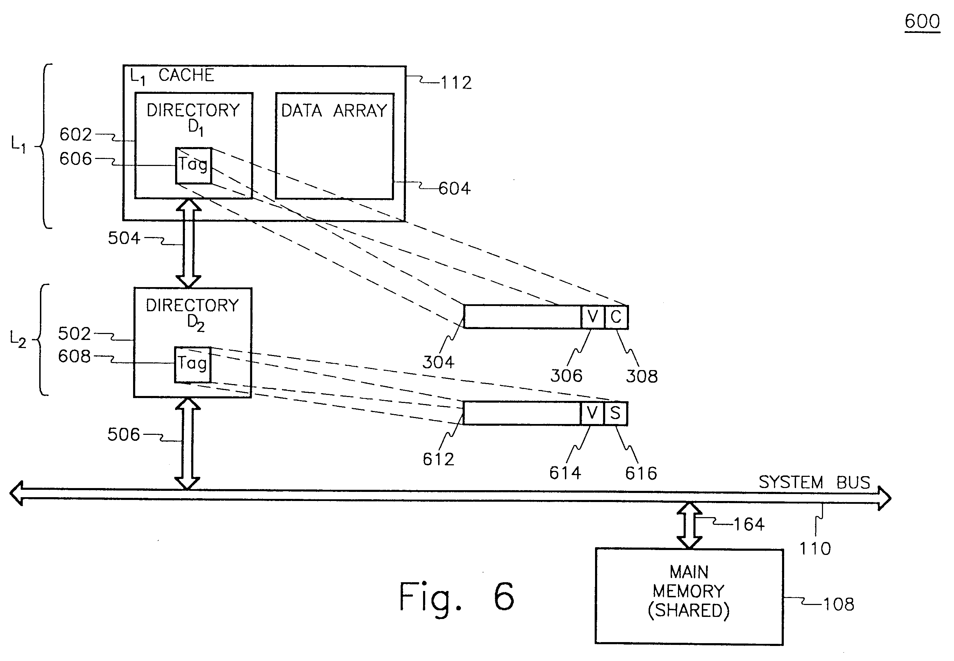

Fig. 6 shows the $L_1$ cache 112 having an internal directory 602 and an internal data array 604. The directory 502 is in communication with a $D_1$ directory 602 via the communication link 504. Importantly, it should be noted that the $L_1$ cache 112 is an SI cache in the first preferred embodiment.

As shown, the $D_1$ directory 602 has corresponding tag entries in $D_2$ directory 502. A tag 606 in $D_1$ directory 602 corresponds with a tag 608 in $D_2$ directory 502. The tags 606 and 608 are blown up in the Fig. 6 into respective blocks 304 and 612 so as to show the status bits of the tags 606 and 608. In order to implement the present invention for an SI cache, the present invention envisions maintaining coherency by using the respective status bits as depicted in blocks 304 and 612.

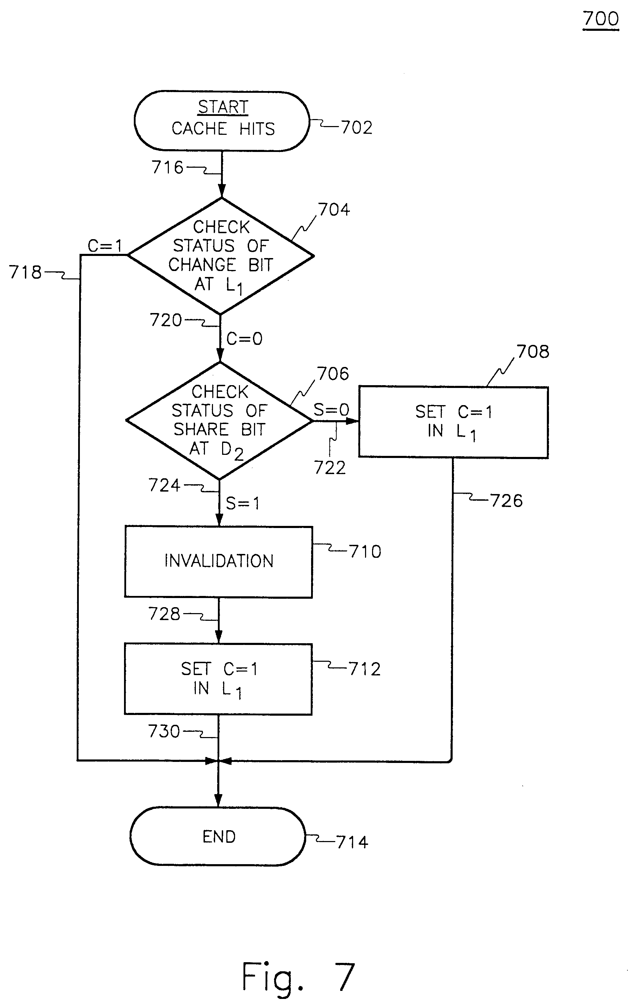

As indicated in block 304, the tag 606 has conventionally a valid bit (v) 306 and a change bit (c) 308. Furthermore, the tag 608 has a valid bit (v) 614 and a share bit (s) 616. Essentially, the tags 606 and 608 are identical with the exception of the foregoing status bits. The function of these status bits relative to the present invention will now be discussed with reference to the architecture of Figs. 5 and 6 as well as flowcharts of Figs. 7-12.

It should be noted that Figs. 7-12 illustrate only one example of a protocol that may be implemented among the $D_2$ directories to practice the present invention. The protocol is chosen only for completeness of the description. Any implementation using the $D_2$ directory 502 of the present invention with a different protocol is intended to be incorporated herein.

Referring back to Fig. 6, the conventional types of memory requests from the CPU 116 include the following: (1) an instruction fetch, (2) a data fetch, and (3) a data store. A hit or a miss may be sent from the $L_1$ cache 112 to its associated CPU 116 in response to one of these memory requests. Consequently, six scenarios are envisioned and will be focused upon below. The hits will be discussed first and then the misses.

If an instruction fetch is received by the $L_1$ cache 112 and a hit occurs, then no action must be taken to maintain coherency. Similarly, if a data fetch is received by the $L_1$ cache 112 and a hit occurs, then no action need be taken. However, if a data store is received by the $L_1$ cache and a hit occurs, the protocol envisions proceeding through the steps shown in a flowchart 700 of Fig. 7.

Flowchart 700 begins at a flowchart block 702. At flowchart block 704, the status of the change bit 308, corresponding to the line to be stored, is observed in the $D_1$ directory 602 of the $L_1$ cache 112. If the change bit (C) 308 is at a logical high (C = 1) in the first preferred embodiment, then the line has already been changed some time in the past. Consequently, no other action need be taken, and the flowchart 700 terminates at flowchart block 714.

However, if the change bit 308 is at a logical low, then the present store will be the first time to the data line in the $L_1$ cache 112. Oftentimes, the data line in this case is referred to in the art as a "clean" line. Accordingly, the flowchart 700 proceeds to flowchart block 706, where the novel $D_2$ directory 502 is consulted.

At flowchart block 706, the status of the share bit 616 of the $D_2$ directory 502 is checked. If the share bit 616 is at a logical low (C = 0), then the line can be found in the MP system only in the $L_1$ cache 112. In this case, the change bit is set at a logical high (C = 1) to indicate change, and the flowchart 700 terminates at flowchart block 714.

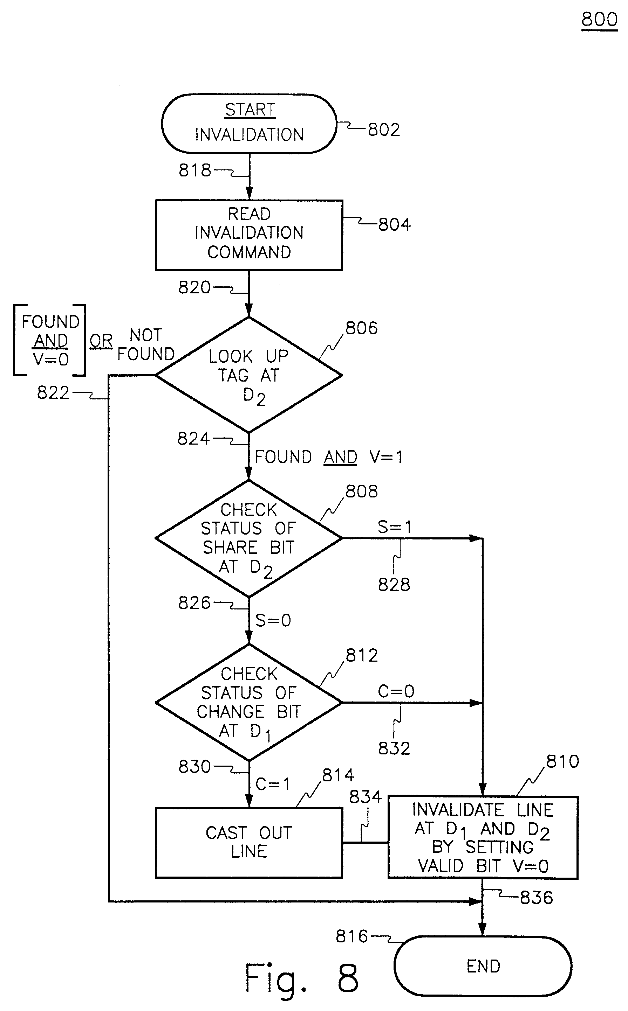

However, if the share bit 616 is at a logical high (C = 1), then the line is potentially shared somewhere else in the MP system 500. The line could be in the main memory 108 or in a different cache associated with a different processor. Consequently, an invalidation process takes place, as indicated at a flowchart block 710. An example of an invalidation process is shown in Fig. 8 and will be discussed in further detail below.

Next, at a flowchart block 712, the change bit 308 at the $D_1$ directory 602 is changed to a logical high (C = 1) to indicate that the present store has changed the corresponding line. Finally, the flowchart 700 terminates at the flowchart block 714.

Fig. 8 is a flowchart 800 which illustrates an example of an invalidation protocol which may be used in the present invention among the $D_2$ directories. Recall that an invalidation occurs at the flowchart block 710 of flowchart 700. The purpose and effect of the flowchart 800 is to invalidate a data line in all other $L_1$ caches, except where the latest data line resides, in the MP system by changing the status of the valid bits 306 and 614 at $D_2$ directories. In the first preferred embodiment, a valid bit at a logical low indicates that the corresponding line is invalid.

For purposes of discussion with regard to flowchart 800, the MPU 102 with its associated external $D_2$ directory 502 of Figs. 5 and 6 will be referred to in the capacity as a system branch receiving an invalidation signal. In other words, it will be assumed that the storing of a data line has occurred in an $L_1$ cache somewhere else in the MP system and that an invalidation of the data line will be solicited at the system branch comprising the MPU 102.

The flowchart 800 begins at a flowchart block 802. At flowchart block 804, the external $L_2$ cache 114, $D_2$ directory 502, and main memory 108 read the invalidation command in the process of monitoring the control lines (not shown) of the system bus 110. As shown in a flowchart block 806, the external $L_2$ cache 114 and the $D_2$ directory 502 retrieve an address from the address bus (not shown) of the system bus 110 and, subsequently, compare the tag of the address with their own tags. If (1) the tag is not found in the directory 502 or if (2) the tag is found but is invalid (V = 0 = logical low), then no invalidation must take place. Moreover, the flowchart 800 terminates at flowchart block 816. Thus, the internal $L_1$ cache 112 need not be disturbed and can be continuously operated on by the CPU 116.

However, if the tag is found and is valid (V = 1 = logical high), then the $L_1$ cache 112 must be consulted to some extent. The extent of interaction and rationale is set forth below.

A relationship exists between the share bit 616 of the directory 502 and the change bit 308 of the directory 602. More specifically, if the change bit 308 indicates that a data line has been changed (C = 1 = logical high), then the share bit 616 must indicate that the data line is not being shared (S = 0 = logical low). Further, it directly follows that if the share bit 616 indicates that the data line is being shared, then the change bit 308 must indicate no change (C = 0 = logical low). However, if the share bit 616 indicates no share (S = 0 = logical low), then it is unclear whether the data line has been changed (c = ?). In light of the foregoing relationship, the directory 602 in the MPU 102 need only be consulted if the share bit indicates no sharing (S = 0 = logical low).

In accordance with the above reasoning, the status of the share bit 616 in the directory 502 is checked, as indicated at a flowchart block 808. If the share bit 616 is at a logical high (S = 1) in the first preferred embodiment, then the MPU 102 knows that it does not have the exclusive copy and that the change bit 308 must be at a logical low (C = 0). Moreover, as shown in a flowchart block 810, the data line is invalidated at caches 112 and 114 by setting respectively the valid bits 306 and 614 to a logical low (V = 0) to thereby indicate invalidity of the data line.

If the share bit 616 is at a logical low (S = 0), then the change bit 308 in the directory 602 is checked, as indicated at a flowchart block 812, in accordance with the above rationale. If the change bit 308 is at a logical low (C = 0), then the flowchart 800 proceeds to flowchart block 810, previously discussed, and terminates at flowchart block 816.

However, if the change bit 308 is at a logical high (C = 1), then the latest, or most up-to-date copy, of the line is present in the $L_1$ cache 112. Accordingly, the latest data line is transmitted, or "broadcast" or "cast out," from the $L_1$ cache 112 to the system bus 110 for retrieval by the $D_2$ directory which sent the invalidation command initially, as indicated in a flowchart block 814. Finally, the flowchart 800 proceeds to flowchart blocks 810 and 816, previously discussed.

The preceding discussion dealt with hits upon receipt of the memory requests, namely, (1) an instruction fetch, (2) a data fetch, and (3) a data store. The following discussion will focus upon misses in regard to the foregoing memory requests.

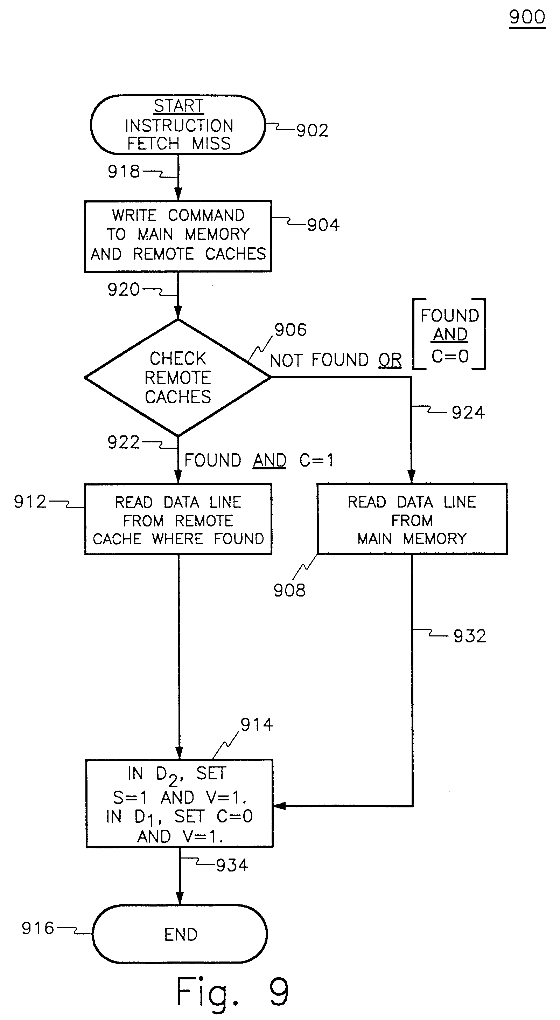

Fig. 9 is a flowchart 900 illustrating a protocol for an instruction fetch miss. At a flowchart block 904, the CPU 116 writes a command, or request, simultaneously to all remote caches and the main memory 108 in order to retrieve the instruction. The remote caches include all $L_1$ and $L_2$ caches associated with other MPUs of the MP system 500 as well as the local, external $L_2$ cache 114 associated with the $L_1$ cache 112. The simultaneous transmission of the command is a performance optimizer in the exemplary protocol.

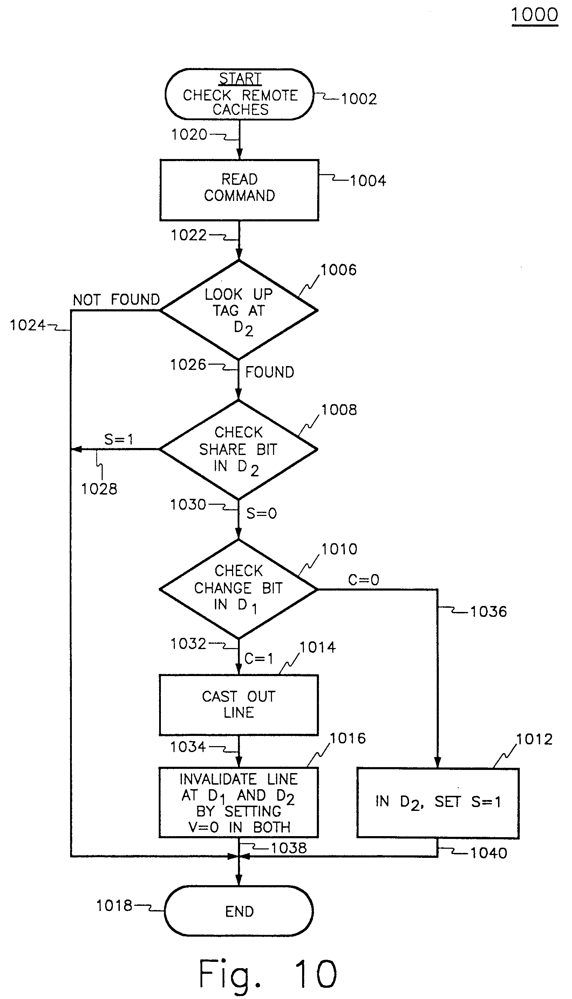

At a flowchart block 906, the remote caches are checked in accordance with an exemplary protocol set forth in Fig. 10. If either (1) the data line is not found in any of the remote caches or if (2) the data line is found and the change bit 308 indicates no change (in the first preferred embodiment, C = 0 = logical low), then the data line is read from the main memory 108, as shown in a flowchart block 908. The data line is loaded by and read from the main memory 108, instead of the remote cache, for performance reasons. The MP system 500 as a whole would suffer a greater performance hit if the data line were loaded by the remote $L_1$ cache because such an action would slow down the MPU associated with the remote $L_1$ cache.

Further, at a flowchart block 914, the share bit 616 and valid bit 306 in the directory 502 are both set to a logical high (S = 1, V = 1); also, the change bit 308 and the valid bit 306 at the directory 602 are set, respectively, to a logical low (C = 0) and a logical high (V = 1).

Referring back to flowchart block 906, if the sought after data line is found in any of the remote caches and if the change bit 308 indicates a change (in the first preferred embodiment, C = 1 = logical high), then it is known that the remote cache has the latest copy of the data line. Recall that the $L_1$ cache 112 was assumed to be an SI cache. Consequently, the data line is read from the remote cache, instead of the main memory 108, pursuant to a flowchart block 912. Finally, at the flowchart block 914, the status bits are manipulated as previously discussed.

Fig. 10 is a flowchart 1000 which shows an exemplary protocol for checking remote caches as is required in the previously discussed flowchart block 906. For purposes of discussion with regard to the flowchart 1000, the MPU 102 with its associated $D_2$ directory 502 of Figs. 5 and 6 will be referred to in the capacity as a system branch receiving the foregoing command from the system bus 110.

At a flowchart block 1004, the remote caches as well as the novel $D_2$ directory 502 of the MP system 500 read the command from the requesting MPU (not shown) from the system bus 110. At a flowchart block 1006, if the tag is not found in the $D_2$ directory 502, then the flowchart 1000 proceeds to a flowchart endblock 1008. Conversely, if the tag is found, then the share bit 616 of the $D_2$ directory 502 is considered.

Recall that a relationship exists between the share bit 616 and the change bit 308. If C = 1, then S = 0. Contrapositively, if S = 1, then C = 0. However, if S = 0, then C = ? The following flowchart blocks are based upon this relationship.

As shown at a flowchart block 1008, if the share bit 616 indicates that the data line is being shared (logical high; S = 1), then C = 0, and the flowchart 1000 terminates at the flowchart endblock 1018. However, if the share bit 616 indicates that the data line is not shared (logical low; S = 0), then the flowchart 1000 proceeds to a flowchart block 1010, where the change bit 308 of the directory 602 is considered.

At the flowchart block 1010, if the change bit 308 indicates that the data line has been changed, the share bit 616 in the directory 502 is set to indicate that the data line is being shared (logical high; S = 1). Moreover, the flowchart 1000 terminates at endblock 1018.

To the contrary, if the change bit 308 shows that the change bit 308 has been changed, then the line is cast out, as shown in a flowchart block 1014. Furthermore, the line is invalidated in the directories 502 and 602 via setting the respective validity bits 614 and 306 to the appropriate logical level (in the first preferred embodiment, V = 0 = logical low), pursuant to a flowchart block 1016. Finally, the flowchart 1000 ends at the block 1018.

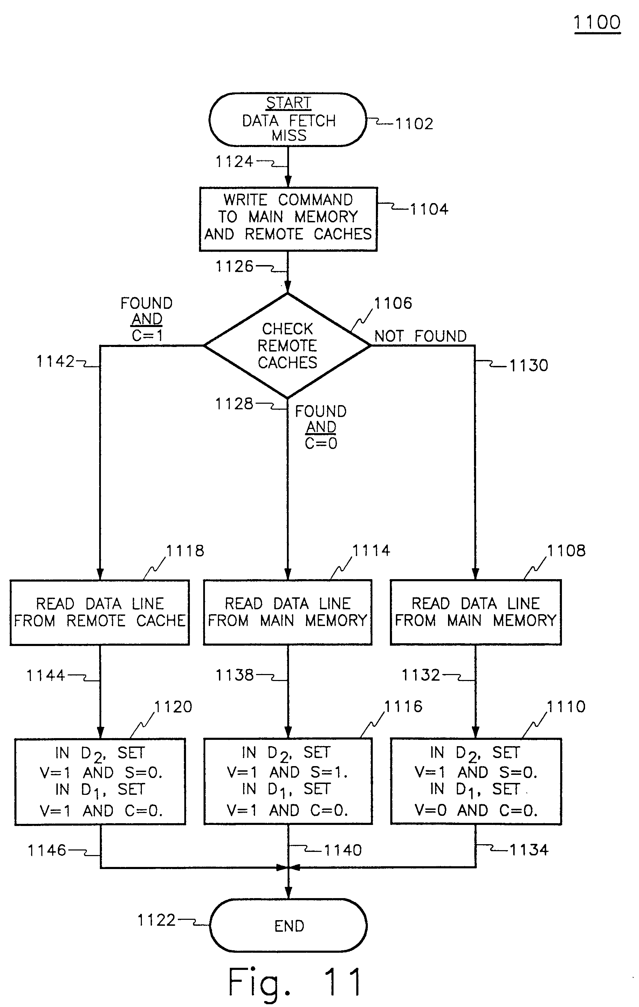

Fig. 11 is a flowchart 1100 which provides an exemplary protocol for a data fetch miss in the first preferred embodiment of the present invention. At a flowchart block 1104, the CPU 116 writes a command simultaneously to all remote caches and the main memory 108 in order to retrieve the data, just as in the flowchart block 904 of Fig. 9 relating to an instruction fetch miss.

The remote caches are checked in accordance with the protocol set forth previously in flowchart 1000 of Fig. 10. If the data line is not found in any of the remote caches, then the data line is read from the main memory 108, as shown in a flowchart block 1108, for performance reasons. Further, at a flowchart block 1110, the valid bit 614 and share bit 616 in the directory 502 are set, respectively, to a logical high (V = 1) and a logical low (S = 0); also, the valid bit 306 and change bit 308 at the directory 602 are both set to a logical low (V = C = 0). Moreover, the flowchart 1100 terminates at flowchart endblock 1122 to complete the protocol for a data fetch miss.

Referring back to flowchart block 1106, if (1) the sought after data line is found in any of the remote caches and if (2) the change bit 308 shows no change (in the first preferred embodiment, C = 0 = logical low), then the data line will be loaded by and read from the main memory 108, as shown by a flowchart block 1114. The read is from the main memory 108, just as with an instruction fetch miss, for the purpose of achieving better performance.

After the foregoing read, the status bits at the directories 502 and 602 are manipulated to finalize the procedure. As shown in the flowchart block 1116, the valid bit 614 and the share bit 616 in the directory 502 are both set to a logical high (V = S = 1); also, the valid bit 306 and the change bit 308 in the directory 602 are set, respectively, to a logical high (V = 1) and a logical low (C = 0). Finally, the flowchart 1100 concludes at the flowchart block 1122.

Referring back to the flowchart block 1106, if (1) the data line is found and the change bit 308 indicates a change (in the first preferred embodiment, C = 1 = logical high), then the data line at the remote cache is the most current. Consequently, at a flowchart block 1118, the data line is read from the remote cache, instead of the main memory 108. Next, at a flowchart block 1120, the status bits at the directories 502 and 602 are manipulated to finalize the procedure. As shown in a flowchart block 1120, the valid bit 614 and the share bit 616 in the directory 502 are set, respectively, to a logical high (V = 1) and a logical low (C = 0); also, the valid bit 306 and the change bit 308 in the directory 602 are set, respectively, to a logical high (V = 1) and a logical low (C = 0). Finally, the flowchart 1100 concludes at the flowchart block 1122, thus finishing the procedure for a data fetch miss in the first preferred embodiment.

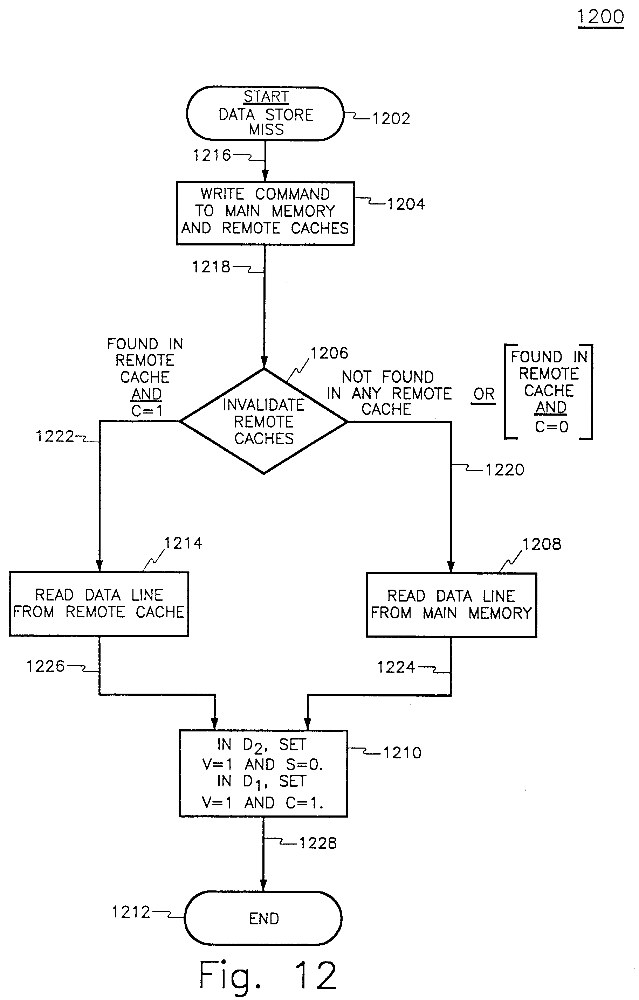

Fig. 12 is a flowchart 1200 illustrating an exemplary protocol for a data store miss. As shown at a flowchart block 1204, a request (write command) for the data line is written onto the system bus 110 by the $D_2$ directory 502. Accordingly, the write command is received by the main memory 108 and all of the remote $L_2$ caches as well as the remote $D_2$ directories 502.

As shown at a flowchart block 1206, the invalidation process as disclosed and discussed above in regard to Figure 8 is performed so that the data line at any remote $L_2$ caches and/or at any of the remote $D_2$ directories 502 is invalidated. The reason for the foregoing invalidation action is primarily policy. However, it should be kept in mind that the data line will be forwarded to the requesting $D_2$ directory 502.

If (1) the data line is neither found in any of the remote caches or if (2) the data line is found in a cache and the corresponding change bit 308 indicates no change (in the first preferred embodiment, C = 0 = logical low), then the data line is read from the main memory 108, as shown in a flowchart block 1208. Next, at the flowchart block 1210, the respective status bits 304 and 612 at the requesting MPU 102 and its associated directory 502 are manipulated to conclude the procedure. In the directory 502, the validity bit 614 is set to indicate validity (V = 1), and the share bit 616 is set to indicate not shared (S = 0). Moreover, in the directory 602, the validity bit 306 is set to indicate validity (V = 1), and the change bit 308 is set to indicate a change (C = 1).

Referring back to the flowchart block 1206, if the data line is found at a remote cache and the change bit 308 indicates a change (in the first preferred embodiment, $C = 1 =$ logical high), then the remote cache has the latest copy of the data line. Accordingly, at a flowchart block 1214, the data line is read from the remote cache. Finally, the flowchart 1200 concludes by setting status bits 304 and 612 as described above.

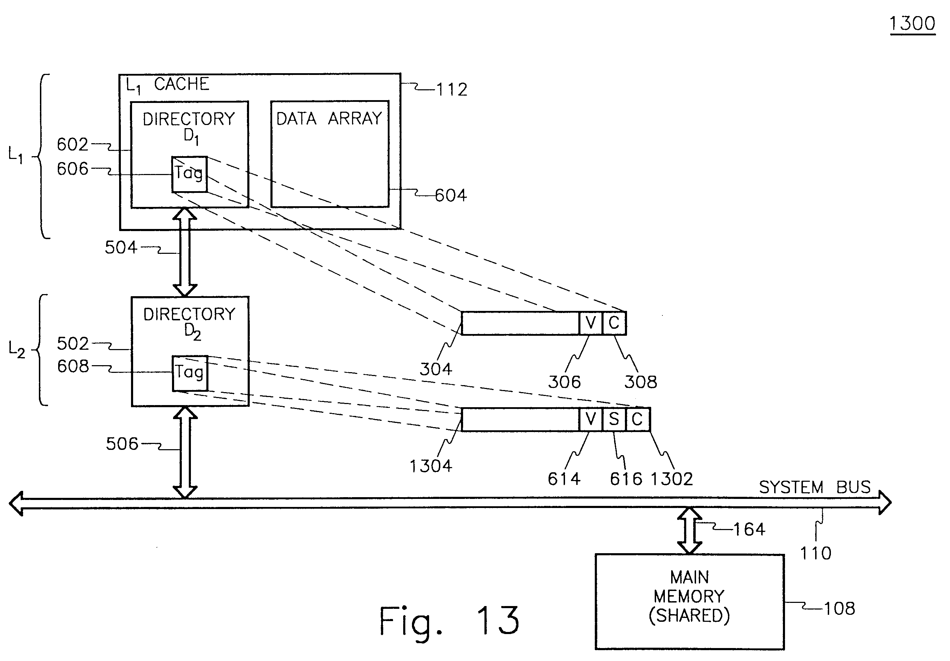

Fig. 13 illustrates a block diagram of a second preferred embodiment of the present invention. Like the first preferred embodiment, the second preferred embodiment is implemented in a MP system having the shared main memory 108.

In the second preferred embodiment, a change bit 1302 as well as the validity bit 614 and the share bit 616 make up a set of status bits 1304 at the directory 502. Moreover, the $L_1$ cache 112 is an ST cache as previously discussed in regard to the first preferred embodiment.

Essentially, the second preferred embodiment can be implemented by using the exemplary protocol suggested in Figs. 7-12 with a minor exception as noted below. The purpose and effect of the second preferred embodiment further reduces the number of transactions (interference) with the MPU 102 resulting in higher performance of the MP system as a whole.

Higher performance is achieved because the change bit 308 in the internal $L_1$ cache 112 need not be consulted as in the flowchart blocks 812 and 1010 of respective Figs. 8 and 10 in regard to the first preferred embodiment. Instead, the change bit 1302 located in the exterior directory 502 is considered.

Updates to the change bit 1302 can occur using any appropriate and/or creative protocol. For example, when a CPU sets the change bit 308, it also could send signals to set the change bit 1302 in the directory 502.

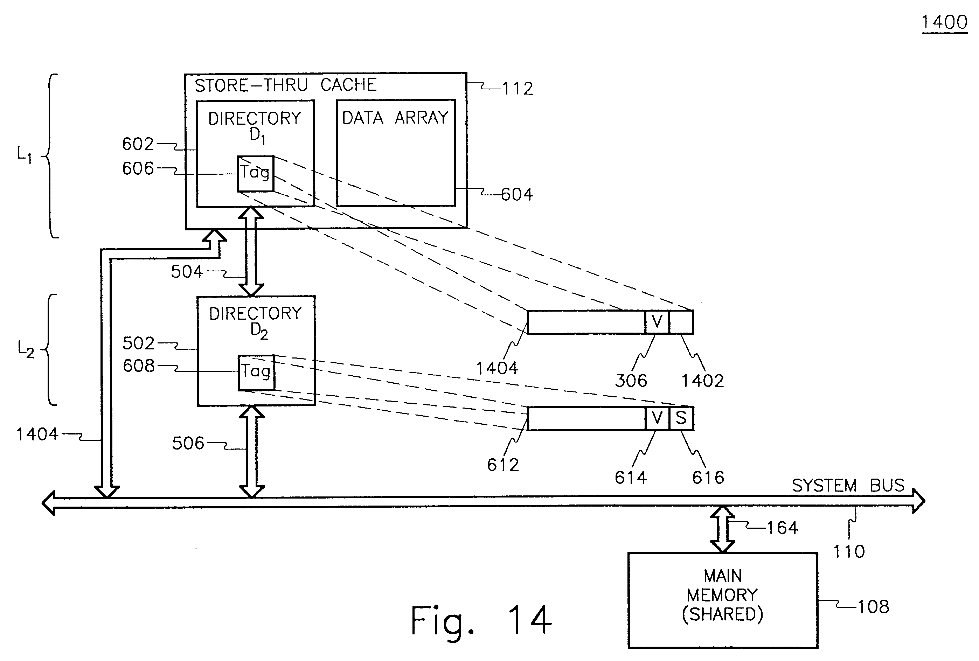

Fig. 14 illustrates a third preferred embodiment of the present invention. The third preferred embodiment can be employed in a MP system 1400 where a store-thru (ST) $L_1$ cache 112 exists in the MPU 102. The following discussion briefly describes ST caches.

One way of maintaining coherency in a MP system is by performing "stores through" from the $L_1$ and/or $L_2$ caches to the main memory 108 upon each update by any processor of caches to thereby maintain the most current data in the main memory. A cache designed to implement the foregoing behavior is referred to as a "store thru" (ST) cache.

However, ST caches when used alone are problematic. As shown in Fig. 14, memory stores from the $L_1$ cache 112 to the main memory 108 take place via a bus 1404, the system bus 110, and the bus 164. Memory stores average between ten and twenty percent of all references to the caches and main memory 108. Thus, the system bus 110 is characterized by heavy traffic, and a substantial bandwidth for the main memory 108 is necessary to avoid a significant performance degradation. Moreover, as processors are added to the MP system 1400, the amount of traffic to and from the main memory 108 increases. Consequently, the number of processors that can be employed is limited and is commensurate with the performance specifications of the main memory 108.

To relieve some of the interference with processors and to thereby increase the number of processors that may be connected to the MP system 1400, the third preferred embodiment shown in Fig. 14 can be implemented. As illustrated at reference numeral 1402, a new set of status bits in a block 1404 is observed in the $D_1$ directory of the ST $L_1$ cache 112.

Specifically, the change bit 308 need not be considered at the internal $L_1$ cache 112. The ST $L_1$ cache 112 eliminates the need for the change bit 308 because of the continuous updating of the main memory 108 by the ST $L_1$ cache 112.

An exemplary protocol for the third preferred embodiment can be derived easily from the exemplary protocol of the first preferred embodiment, as set forth in flowcharts 700-1200 of respective Figs. 7-12. For instance, the flowcharts 700-1200 can be applicable to the third preferred embodiment provided that the change bit is assumed to be at a logical low $(C = 0)$ when one analyzes the flowcharts and the related discussions.

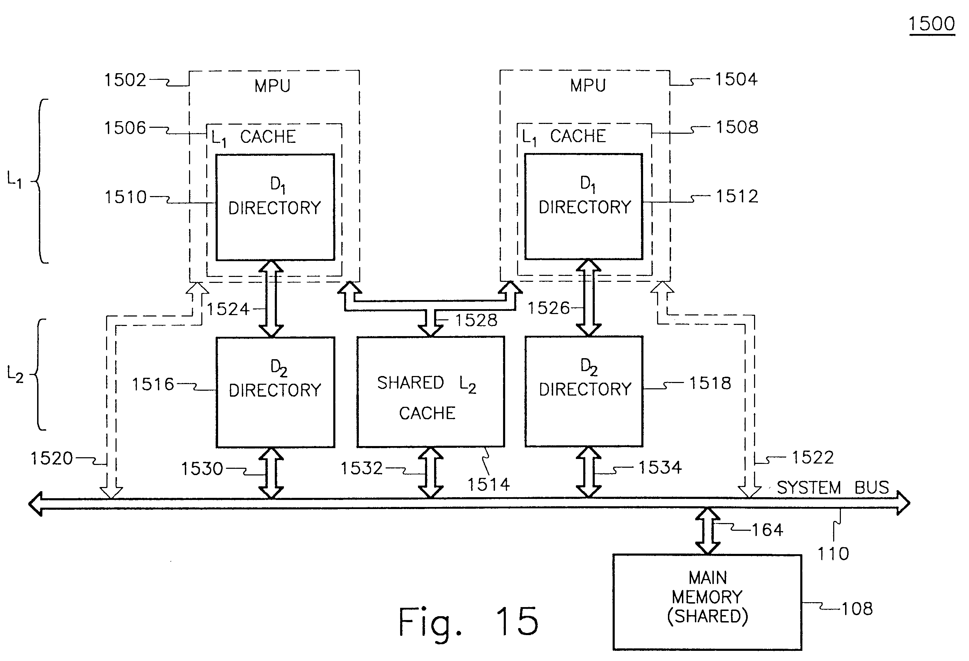

Fig. 15 illustrates a fourth preferred embodiment of the present invention. MPUs 1502 and 1504 have corresponding $L_1$ caches 1506 and 1508 with respective $D_1$ directories 1510 and 1512. In the fourth preferred embodiment, the MPUs 1502 and 1504 do not have private external $L_2$ caches. The MPUs 1502 and 1504 share an $L_2$ cache 1514.

The present invention is implemented by interfacing external $D_2$ directories 1516 and 1518 between the system bus 110 and respective $D_1$ directories 1510 and 1512. One $D_1$ directory should be implemented for each $L_1$ cache. Moreover, the operation of the fourth preferred embodiment can be implemented, for example, pursuant to the protocol of flowcharts 700-1200 of respective Figs. 7-12.

In addition, the fourth preferred embodiment can be implemented with $L_1$ caches which are either SI or ST caches. If both the $L_1$ cache 1506 and the $L_1$ cache 1508 are SI caches, then both the $D_2$ directories 1510 and 1512 would have status bits 612 as in Fig. 6 or status bits 1304 as in Fig. 13. However, if either or both of the $L_1$ caches 1506 and 1508 are ST caches, as indicated by phantom arrows 1520 and 1522, then the ST caches could have the status bits 612 as in Fig. 6.

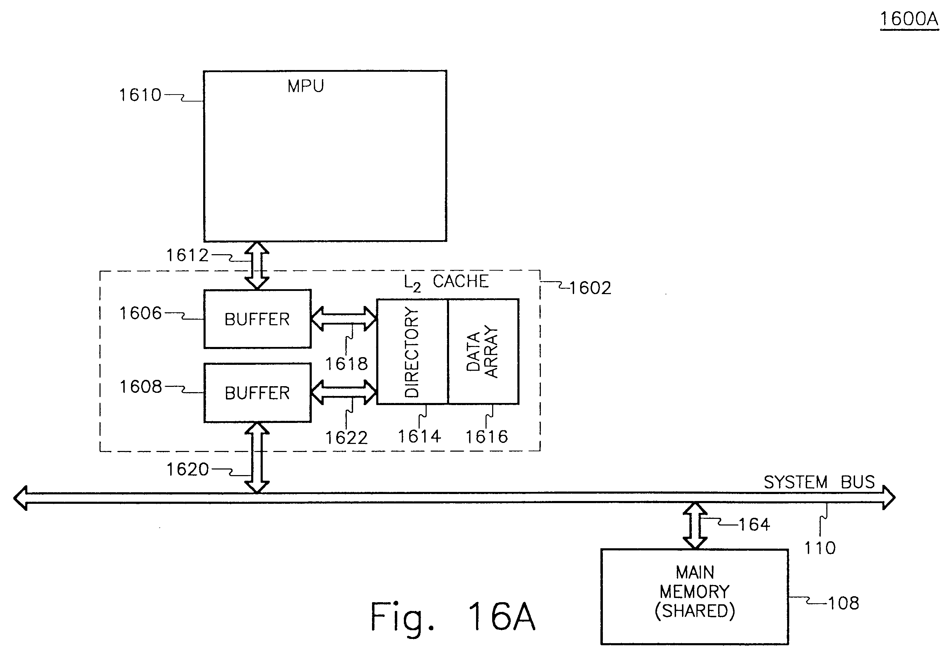

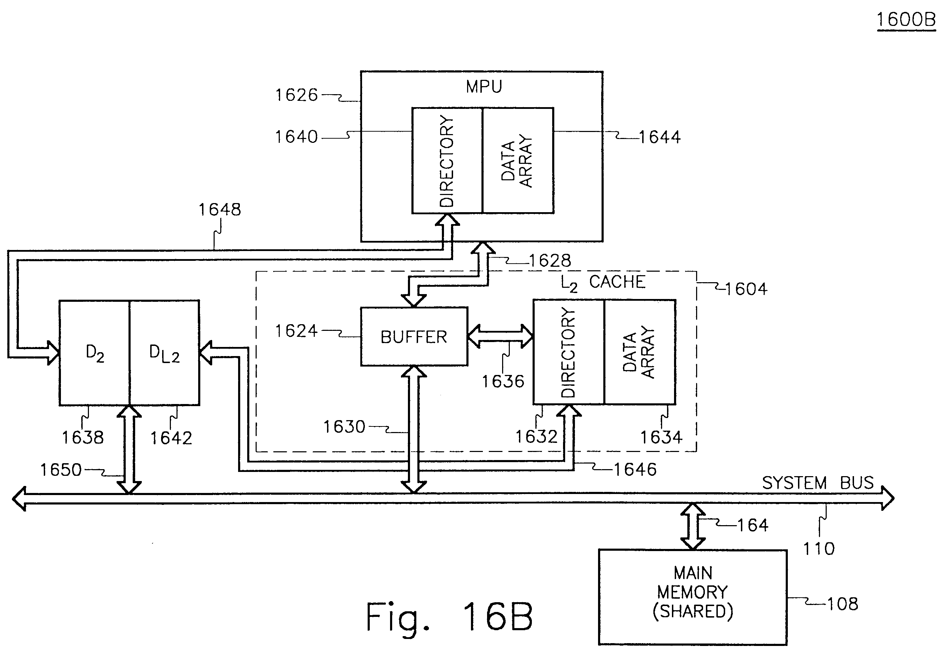

Fig. 16 shows a fifth preferred embodiment of the present invention which can be utilized to increase the performance of single-ported $L_2$ caches, which are conventional in the art. A single-ported cache is a type of cache which can process only one request for a data line at a time, as opposed to a dual-ported cache which can handle two requests at a time.

Fig. 16A illustrates a conventional dual-ported $L_2$ cache 1602. Fig. 16B shows a fifth preferred embodiment of the present invention, which utilizes a single-ported $L_2$ cache 1604.

As shown in Fig. 16A, the dual-ported $L_2$ cache 1602 simultaneously processes requests via buffers 1606 and 1608. The buffer 1606 communicates to an MPU 1610 through a bus 1612 and to a $D_{L2}$ directory 1614 through a bus 1618. Similarly, the buffer 1608 communicates to the system bus 110 through a bus 1620 and to the $D_{L2}$ directory 1614 through a bus 1622.

As shown in Fig. 16B, the single-ported $L_2$ cache 1604 processes only one request at a time via a buffer 1624. The buffer 1624 is connected to both an MPU 1626 and the system bus 110 through respective buses 1628 and 1630. Moreover, the buffer 1624 communicates to a directory 1632 through a bus 1636. At a given time, the buffer 1624 can process either a request from the MPU 1626, or alternatively, a request from the system bus 110.

The fifth preferred embodiment envisions not only having a $D_2$ directory 1638 operating with respect to a directory 1640 in the same capacity as the previous preferred embodiments, but also having a $D_{L2}$ directory 1642. The $D_{L2}$ directory 1642 shadows the directory 1632 of the $L_2$ cache 1604 via a bus 1646, just as the $D_2$ directory 1638 shadows the directory 1640 via a bus 1648. In other words, the $D_{L2}$ directory 1642 is essentially identical to the directory 1632 of the $L_2$ cache 1604, except for status bits. Moreover, the $D_{L2}$ directory 1642 can be consulted by the system bus 110 for the status of the directory 1632 via a bus 1650.

The purpose and effect of the fifth preferred embodiment is that the performance of a single-ported, external $D_2$ cache is significantly enhanced so as to achieve nearly the same high performance as a double-ported $L_2$ cache.

It should be understood that present invention is not limited to its preferred embodiments, and that the preferred embodiments presented above are merely for the purposes of illustration. The scope of the present invention should therefore be interpreted by the following claims as defined by the foregoing figures and text.

## Claims

1. Memory system for reducing the number of interactions directed to a cache within multiple levels of cache storage in a multiprocessor system having shared memory, characterized by

   a directory (D) interposed between said cache (L1) and a next higher level of cache storage (L2), said directory having means for determining whether data lines are within said cache; and

   a means in said directory for indicating whether said data lines in said cache are shared by other memory locations of said multiprocessor system (MP).

2. Memory system of claim 1, characterized in that said cache comprises means for indicating whether data lines in said cache have been changed.

3. Memory system of claim 1, characterized in that said system can operate without enforcement of an inclusion property between said cache and said next higher level of cache storage.

4. Memory system of claim 1, characterized in that a means in said directory for indicating whether data lines in said internal cache have been changed.

5. Memory system of claim 1, characterized in that said next higher level of cache storage is shared by at least one other processor (MPU) of said multiprocessor system (MP).

6. Memory system for reducing interference of an internal cache of a processor in a multiprocessor system wherein the processor is coupled to an external cache which communicates with a system bus and wherein the internal cache has a first directory, the system characterized by
   (1) a second directory (D2) coupled to said first directory (D1) of said internal cache and to said system bus; and
   (2) a means in said second directory for indicating whether data lines in said internal cache are shared by other memory locations of said multiprocessor system.

7. Memory system of claim 6, characterized in that said internal cache is a store-in cache and wherein said first directory of said internal cache further comprises a means for indicating whether data lines in said internal cache have been changed.

8. Memory system of claim 6, characterized in that said internal cache is a store-thru cache.

9. Memory system of claim 6, characterized in that said external cache comprises a third directory and further comprising a fourth directory (L4) coupled to said third directory (L3) and coupled to said system bus.

10. Memory system of claim 6, characterized in that said system can operate without enforcement of an inclusive property between said external cache and said internal cache.

11. Memory system of claim 7, characterized by a means in said second directory for indicating whether data lines in said internal cache have been changed.

12. Memory system of claim 7, characterized in that external cache is shared by another processor (MPU) of said multiprocessor system (MP).

13. Memory system of claim 7, characterized in that said system can operate without enforcement of an inclusive property between said external cache and said internal cache.

14. Memory system of claim 8, characterized in that external cache is shared by another processor (MPU) of said multiprocessor system (MP).

15. Memory system for reducing interference with an internal cache of a processor in a multiprocessor system, wherein the processor is coupled to an external cache which communicates with a system bus and where the internal cache has a first directory, the system, characterized by
    (1) at least one data bit in said first directory (L1) for each data line in said internal cache indicating whether said each data line has been changed by said processor (MPU);
    (2) a second directory (L2) coupled to said first directory (L1) of said internal cache and to said system bus; and
    (3) at least one data bit in said second directory (L2) for each data line in said internal cache indicating whether said each data line is shared by other memory locations of said multiprocessor system (MP).

16. Memory system of claim 15, characterized in that said internal cache is a store-in cache.

17. Memory system of claim 15, characterized in that said internal cache is a store-thru cache.

18. Memory system of claim 15, characterized in that said external cache comprises a third directory (L3) and
    (1) at least one data bit in said third directory (L3) for each data line in said external cache indicating whether said each data line has been changed;
    (2) a fourth directory (L4) coupled to said third directory (L3) and coupled to said system bus; and
    (3) at least one data bit in said fourth directory (L4) for each data line in said external cache indicating whether said each data line is shared by other memory locations of said multiprocessor system (MP).

19. Memory system of claim 16, characterized in that said system can operate without enforcement of an inclusion property between said external cache and said internal cache.

20. Memory system of claim 16, characterized in that said external cache is shared by another processor (MPU) of said multiprocessor system (MP).

21. Memory system of claim 17, characterized in that said system can operate without enforcement of an inclusion property between said external cache and said internal cache.

22. Memory system of claim 17, characterized in that said external cache is shared by another processor (MPU) of said multiprocessor system (MP).

23. Method for reducing interference with the internal cache of a processor in a multiprocessor system, where the processor is coupled to an external cache which communicates with a system bus, where the internal cache has a first directory, and where a second directory shadows said first directory and is interfaced between the first directory and the system bus, characterized by the steps of:
    (a) writing a fetch command for a data line onto said system bus;
    (b) reading said fetch command from said system bus at said second directory (L8); and
    (c) determining at said second directory whether said data line resides at said first directory (L1).

24. Method of claim 23, characterized by the step of determining at said second directory (L2) whether said data line is valid, if said data line resides at said first directory (L1).

25. Method of claim 24, characterized by the step of determining at said second directory (L2) whether said data line has been changed, if said data line is valid.

Fig. 1
PRIOR ART

200

Fig. 2
PRIOR ART

CACHE
202

DIRECTORY

DATA ARRAY (STORAGE)

REAL MEMORY ADDRESS FROM REQUESTING CPU

MEMORY ADDRESS

TAG
CC ID
BYTE IN LINE

T
C
B

TO REQUESTING CPU

MISS

HIT

208  210  212  214  216  217  218  220  222  224  226  228  230  232  234  204  206

300

Fig. 3

PRIOR ART

SYSTEM BUS

110

164

MAIN MEMORY (SHARED)

108

MPU₁

CPU

TLB

CACHE L₁

102

116

118

112

DIRECTORY D₁

DATA ARRAY

$T_{i2}$

$\ell_{i2}$

202

206

204

X | ... | V | C

308

306

STATUS BITS
302

304

16

Fig. 4
PRIOR ART

EP 0 481 233 A2

Fig. 5

PRIOR ART

EP 0 481 233 A2

Fig. 6

EP 0 481 233 A2

700

Fig. 7

800

START
INVALIDATION — 802

818 →

READ
INVALIDATION — 804
COMMAND

820 →

$\begin{bmatrix} \text{FOUND} \\ \underline{\text{AND}} \\ \text{V=0} \end{bmatrix}$ $\underline{\text{OR}}$ $\begin{array}{c} \text{NOT} \\ \text{FOUND} \end{array}$   LOOK UP
TAG AT
$D_2$ — 806

822 →

824 → FOUND $\underline{\text{AND}}$ V=1

CHECK
STATUS OF — 808
SHARE BIT
AT $D_2$ ——→ S=1

828

826 → S=0

CHECK
STATUS OF — 812
CHANGE BIT
AT $D_1$ ——→ C=0

832

830 → C=1 — 814

CAST OUT
LINE

834

INVALIDATE LINE — 810
AT $D_1$ AND $D_2$
BY SETTING
VALID BIT V=0

836

816 →

END

Fig. 8

900

Fig. 9

Fig. 10

1100

Fig. 11

1200

Fig. 12

Fig. 13

Fig. 14

EP 0 481 233 A2

Fig. 15

EP 0 481 233 A2

Fig. 16A

EP 0 481 233 A2

Fig. 16B